(19) Europäisches Patentamt
European Patent Office
Office européen des brevets

(11) EP 0 540 293 B1

(12) EUROPEAN PATENT SPECIFICATION

(45) Date of publication and mention
of the grant of the patent:
24.07.1996 Bulletin 1996/30

(51) Int Cl.6: C08J 5/18, B32B 27/34, B29C 55/12

(21) Application number: 92309827.1

(22) Date of filing: 27.10.1992

(54) Oriented film easy to split and method of producing the same

Orientierter trennbarer Film und Verfahren zu seiner Herstellung

Feuille orientée facilement déchirable et procédé pour sa fabrication

(84) Designated Contracting States:
BE CH DE DK ES FR GB IT LI NL SE

(30) Priority: 28.10.1991 JP 308427/91
31.10.1991 JP 313675/91

(43) Date of publication of application:
05.05.1993 Bulletin 1993/18

(60) Divisional application: 95109065.3 95109066.1

(73) Proprietor: IDEMITSU PETROCHEMICAL CO.
LTD.
Tokyo 100 (JP)

(72) Inventors:
• Takashige, Masao,
c/o Idemitsu Petrochem. Co., Ltd
Himeji-shi, Hyogo-ken (JP)
• Hayashi, Takeo,
c/o Idemitsu Petrochem. Co., Ltd
Himeji-shi, Hyogo-ken (JP)
• Utsuki, Katsumi,
c/o Idemitsu Petrochem. Co., Ltd
Himeji-shi, Hyogo-ken (JP)
• Iwamoto, Takehiro,
c/o Idemitsu Petrochem. Co.,Ltd
Himeji-shi, Hyogo-ken (JP)

(74) Representative: Jackson, Peter Arthur
GILL JENNINGS & EVERY
Broadgate House
7 Eldon Street
London EC2M 7LH (GB)

(56) References cited:
EP-A- 0 288 972          EP-A- 0 318 964
EP-A- 0 475 720          FR-A- 2 327 060

• DATABASE WPIL Week 2392, Derwent
Publications Ltd., London, GB; AN 92-187600
• DATABASE WPIL Week 3192, Derwent
Publications Ltd., London, GB; AN 92-253426
• PATENT ABSTRACTS OF JAPAN
• PATENT ABSTRACTS OF JAPAN

## Description

The present invention is related to a laminated film easy to split and a production method thereof, e.g. a base film for the bag to pack foods, medicines, industrial products and so on.

In recent years, films such as linear chain low density polyethylene (L-LDPE) have been widely used for a seal base film (sealant) of the bag to pack foods, medicines and so on. However, this L-LDPE film was safe to pack contents because the seal strength was excellent, but on the other hand, because a split resistance was too big, it was difficult to cut the film straight along a predetermined direction when opening up. In consideration of these problems, various inventions have been proposed to give the film features of ease to split and to be cut straight.

Examples: (a) a laminated film using a uniaxial oriented film for a middle layer film (Japanese Patent Application Publication No. 58-38320 bulletin, Japanese Patent Application Publication No. 55-31725 bulletin); (b) a laminated film made easier to split by being given a minute blemish to the surface thereof; (c) a (laminated) film with a tape for the opening attached to an opening part; and so on.

In the laminated film (a) mentioned above, because one layer is added as the middle layer film, the material cost and the processing cost to laminate films on top of one another increase. The uniaxial oriented film is used as a middle layer film but its use does not contribute to the strength any more. In the laminated film (b), even if the ease to open can be improved by putting minute blemishes on the film, the ease to cut straight is under control of the feature of the base material itself. Even if the blemishes put on the surface are few, there is fear of decreasing the strength. As for the film (c), because the tape for the opening is additionally used, the cost becomes higher, which may cause the decline of the productivity.

Also, conventionally, the plastic film was heat-treated to fix a film molecular orientation after biaxially oriented by Tubular method for the purpose of getting stability of dimension. In the heat-treatment, when a film of tubular nylon 6 folded flatly is heat-treated by the tenter method, the upper and lower films are melted by heat and stick to each other and thereafter it is impossible to separate into two sheets, whereby the film processed by means of prior art was unusable as a product. These problems are conspicuously seen when a plastic film is a crystalline thermoplastic resin film like a polyamide. Formerly, to solve the technical problems, one improved tenter method (Japanese Patent Application Publication No. 46-15439 bulletin) was proposed, wherein the film folded flat after being biaxially oriented in tubular situation is separated into two films by cutting both edges in the direction of the width, and they are introduced into the tenter in the condition where the both edges of each film are held with clips to keep a certain clearance between each film. Incidentally, adopting the tubular method, where the tubular film formed into a bubble shape by compression of air is heat-treated, can solve the problem of sticking of films by heat. However, though in the heat treatment based on the above-mentioned improved tenter method, the films do not stick to each other, the bowing phenomenon (a phenomenon where a delay in the orientation at the central part occurs compared with both side parts) conspicuously occurred. Though lowering a heat treatment temperature naturally decreases the bowing ratio, it brings about a new problem of increasing the shrinkage percentage in the heat treatment of the boil, retort and so on. The purpose of the present invention is to provide an oriented film easy to split which features the excellent ease to split, the ease to cut straight and the enough impact strength and also to provide a production method of the oriented film easy to split to obtain these features effectively.

EP-A-0475720, which forms part of the state of the art for some states under EPC Article 54(3) and (4), discloses a biaxially oriented film comprising a blend of nylon 66 and nylon MXD6, the weight ratio of said nylon 65 and said nylon MXD6 being 60;40, the orientation being 3 in both the MD and TD directions.

FR-A-2327060 discloses a biaxially oriented film comprising a blend of an aliphatic polyamide and poly-metaxylylene adipamide in a weight ratio of 85:15, the orientation being 3,5 in the MD and 3,7 in the TD directions respectively.

According to the invention, a biaxially oriented laminated film, which is easy to split, comprising a layer with a blend of nylon (Ny6) and poly meta-xylylene adipamide (MXD6), the weight ratio of said Ny6 and said MXD6 being 40-85: 60-15, and the orientation ratios being at least 2.8 in both the MD and TD directions; is characterised in that first and third layers containing Ny6 and MXD6 are laminated to opposite sides of the said Ny6 - MXD6 layer which forms a second layer, the weight ratio between Ny6 and MXD6 in the first and third layers being 60-95:40-5, there being more MXD6 contained in the second layer than in the first and third layers, the thickness ratio of said first to third layers being 1:8:1-4:2:4.

In one case that nylon 66 (Ny66) is used as an example of Ny6.

The weight ratio between Ny66 and MXD6 is 40-85:60-15 but 50-80:50-20 is more desirable. When the ratio of MXD6 is smaller than 15, the ease to split and the ease to cut straight tend to become worse. Oppositely, when the ratio of MXD6 is more than 60, the practicality becomes poor because the impact strength falls substantially. On the other hand, Ny66 is contained for the sake of heat resistance of the oriented film easy to split. The production of the oriented film, which is easy to split, is conducted by first mixing Ny66 and MXD6 at weight ratio of 40-85:60-15, fusing and extruding it, and orienting a raw film obtained by cooing down at the magnification ratio of 2.8 and over in the directions of MD and TD. Incidentally, though the raw film is oriented at the magnification ratio of 2.8 and over, the desirable ratio is 3.0 and over. It is because when the orientation ratio is smaller than 2.8 times, the ease to split and the ease to cut straight become worse. The impact strength also decreases, so there is a problem in practical use. Incidentally, the term "orientation" used already several times means a simultaneous biaxial orientation based on the tubular method. Besides, it is possible to add an addition to the oriented film based on the present invention if necessary. Available additions are anti-blocking pill (inorganic filler and so on), water repeller (ethylene-dis-stearic acid ester and so on), lubricant (stearic acid calcium and so on) and so on. Incidentally, the oriented film easy to split according to the present invention can laminate with other films.

In one case nylon 6-66 copolymer (Ny6-66) is used as an example of Ny6.

Though the weight ratio between Ny6-66 and MXD6 is, for example, 40-85:60-15, 50-80:50-20 is more desirable. When the ratio of MXD6 is out of the above-mentioned range, the characteristic of MXD6 is the same as the case of Ny66 which was already explained above. Ny6-66 is contained for the purpose of giving the oriented film shrinkage. The production of this oriented film is the same as the case that Ny66 is used. Incidentally, like the case of Ny 66 mentioned above, it is possible to use this oriented film, too, as one film in a laminated film having more than one layers of films.

As for the thickness ratio between the 1st layer and the 2nd layer, when the thickness of the 1st layer becomes smaller than half of the thickness of the 2nd layer, the ease to split which is the purpose of the present invention is lowered. Incidentally, on the condition of laminating the 1st layer and the 2nd layer as one, further laminating is possible.

The oriented easy to split film with nylon 6(Ny6) is used as the 2nd layer and a layer containing Ny6 and MXD6, as the 1st and 3rd layers, is laminated thereto. The weight ratio of Ny6 and MXD6 in the 1st and 3rd layers is 60-95:40-5. The MXD content against Ny6 in the 2nd layer is greater than those in the 1st and the 3rd.

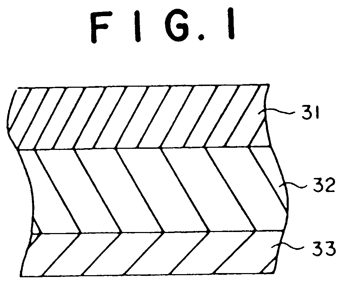

In this case, the weight ratio of Ny6 and MXD6 in the 1st and 3rd layers is 60-95:40-5, but 70-90:30-10 is more desirable. When Ny6 content is smaller than 60, the pinhole resistance declines. Oppositely, when the Ny6 content is larger than 95, the ease to cut straight, which is the purpose of the present invention, declines. The thickness ratio in the lst-3rd layer is e.g. 1:8:1-4:2:4, but 15:70:15-35:30:35 is more desirable. Also, the thickness ratio between the 1st (or the 3rd) and the 2nd layer is, e.g. 1:8-2:1, but 15:70-35:30 is more desirable. Incidentally, when this ratio is smaller than 1/8, the pinhole resistance declines. Also, the thickness ratio between the 1st layer and the 3rd layer is 1:2-2:1. Figure 1 shows a film having the 3-layer structure wherein the 1st layer 31, the 2nd layer 32 and the 3rd layer 33 are laminated in this order, but as long as the lst-3rd layers are united into one, the laminating order of each layer does not matter.

The method of producing the above-explained oriented film for the second layer comprises the steps of: producing a raw film by fusing and extruding a raw material mixture containing nylon (Ny6) and polymeta-xylylene adipamide (MXD6) at the weight ratio of 40-85:60-15 from an extruder; orienting biaxially the raw film with an orientation ratio of 2.8 and over in MD direction and TD direction by the tubular method; folding the oriented film flat; and heat-treating the folded film.

Before the step of fusing and extruding by the extruder, an additional step of kneading the raw material mixture by fusing at the temperature of 300°C and under can be added.

When additionary providing a process of kneading the raw material mixture by fusing at the temperature of 300°C and under, an excellent precision of the thickness can be gained. A kneading machine which is used in a manufacturing process of the fusion kneading of the raw material mixture can be optionally selected, but a biaxial kneading machine is desirable. Also, the temperature of fusion in the case of kneading by fusion should be kept at 300°C and under because the fabricability in orientation is lowered at the temperature higher than 300°C. Also, it will lower an impact strength and a ease to cut straight of the oriented film ease to split.

In the step of biaxial orientation using the tubular method, it is desirable that the temperature should be controlled along the circumference direction of the bubble-like raw film so that a heating temperature in the side part in the width direction when folding the bubble-like raw film may be lower than that in other parts which will be used as a product later. By controlling a heating condition at the time of the biaxial orientation, the bowing phenomenon which is in the reverse direction of bowing phenomenon which occurs in the latter heat treatment process is caused intentionally, by which the reduction of bowing ratio is achieved. To expect such an operation, it is necessary to control temperature of the heater to heat the side part in the width direction when folding the bubble-like raw material film and the heater to heat other parts which will be used as a product later. The temperature of the heater to heat the side part of the direction of the width of the bubble-like raw film is made to be 10-100°C, desirably, 20-90°C lower than the average temperature of all the heaters. Also, the temperature of the heater to heat the other part which is used as a product is made to be 10-100°C, desirably 20-90°C higher than the average temperature of all the heaters. Incidentally, when the temperature difference of each heater is less than 10°C, the bowing phenomenon in reverse direction does not reach the expected condition and when the temperature difference of each heater is more than 100°C, the shape of bubble does not become stable. In order to separately control the temperature of the heater to heat the side part of the direction of the width when folding a film and the heater to heat the other part which is used as a product, for example, two heaters to heat the side part in the width direction of the bubble-like raw film, and two heaters to heat the other part which is used as a product, need to be provided. Also, because the temperature inclination covering all the circumference of the bubble-like raw film should be as gentle as possible, it is desirable to prepare more than four heaters to improve the heat control over the film. Moreover, it is desirable to heat the bubble-like raw film so that the heating temperature at the end in the film width direction may be lowest and that at the center part of other parts which is used as a product may be highest. But, the heat treatment of the raw film should be done at the temperature lower than the melting point of the film (220°C).

The heat treatment of the film folded flatly should be done through two steps; the first heat treatment process at the temperature of 120-190°C by the tubular method and the second heat treatment process at the temperature of 190-220°C by the tenter method.

Because the 2-stage heat treatment can check bowing, the ease to cut straight along the width direction at an optional place of the film obtained as a product is improved. Also, the adhesion and stickiness by fusion which often occurred in the process of heat treatment can be prevented. The first heat treatment by the tubular method is done with the temperature range of 120-190°C for example, but 140-190°C is desirable. When the temperature is lower than 120°C a curling of the film is too big, so that both side parts are difficult to be held. Also, when the temperature is higher than 190°C, because films stick to each other by fusion, it is impossible to separate such a stuck film into two sheets after the 1st heat treatment process. Incidentally, it is desirable that the heat treatment time is one second and over. When it is under 1 second, a heat fixation tends to be insufficient. Though there is no upper limit of heat treatment time, the longer the treatment time becomes, the larger orientation equipment is required, which makes the cost higher. Therefore, the heat treatment time should normally be between 1-30 seconds. In the first process of heat treatment, the film relaxation ratio is set to be 15% and under (in MD direction and/or TD direction), and desirably, it should be set to be 10% and under. By giving the film the heat treatment in the condition of relaxing it a little, a crystallinity of the film is improved and the reduction of relaxation ratio is achieved and consequently, the film with dimensional stability is obtained. In the heat treatment by the tubular method, the bowing ratio is 0. Moreover, because a shrinkage stress falls, a bowing ratio caused by the second heat treatment process declines. In other words, anisotropy of the material nature in the width direction of the film reduces and as a result, the ease to cut straight is improved further.

The 2nd process of the heat treatment by the tenter method is done with the temperature range of 190-220°C, but it should be 190-215°C desirably. When it is lower than 190°C, a shrinkage ratio becomes big and isn't desirable. Also, when it is higher than 220°C, a fusion among films occurs and it is impossible to roll them as products of two sheets. Incidentally, the condition of heat treatment time is the same as the case of the heat treatment of the above-mentioned 1st process. In the 2nd process of heat treatment, the film relaxation ratio is set to be 15% and under, but to be 10% and under desirably. It is also desirable that after the first step of heat treatment, the both ends of the width direction of the film are cut open to separate them into two and that the 2nd process of heat treatment should be done with air contained between the both films. Moreover, as for the heat treatment process of the film folded flat, it is possible to implement the heat treatment of the 1st process based on the tenter method instead of the above-mentioned tubular method. The heat treatment temperature in this case is, e.g. 120-190°C, but 140-190°C is desirable. When lower than 120°C, two sheets of film are fused in the 2nd process of the heat treatment and the stability with the ease to cut straight is lowered. On the other hand, when higher than 190°C, in the first process of the heat treatment, the fusion of two sheets occurs. Incidentally, the condition of the relaxation ratio of the film and the heat treatment time by this tenter method are the same as in the case of the tubular method.

In the drawings:

Figure 1 is a sectional view which shows a construction of the film according to the present invention.

Figure 2 is a schematic diagram of an equipment used in the production method of the oriented film easy to split concerning this invention.

Figure 3 is a view which shows a way of evaluating the ease to cut straight.

Experimental example 1 (not according to the present invention)

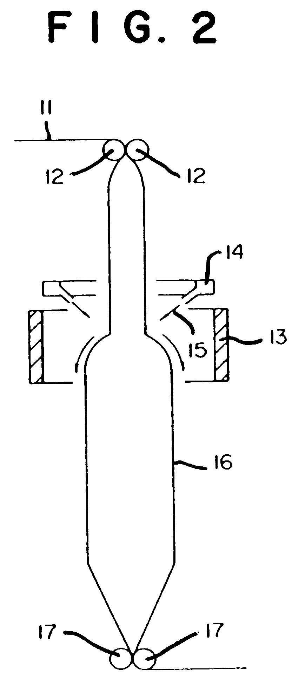

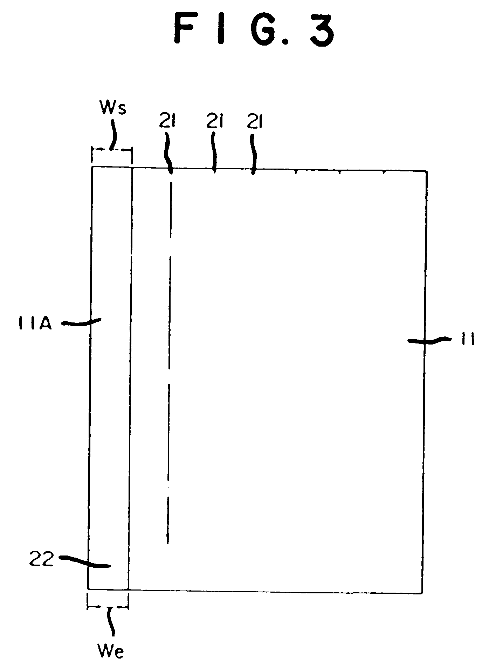

First, a raw film 11, for use as the second layer, (see Figure 2) is obtained by fusing and kneading a material mixture containing nylon 66 (Ny66) and polymeta-xylylene adipamide (MXD6) at the weight ratio of 80:20 in an extruder at the temperature of 280°C subsequently extruding the fused material from an accompanied dice with the diameter of 90 mm into a cylinder-like film and cooling the thus-obtained film down with water. Nylon 66 produced by Ube Kosan Co. LTD. (the tradename: UBE nylon 2026, a relative viscosity - 3.5) is used as Ny66 in this experimental example 1. Also, polymeta-xylylene adipamide produced by Mitsubishi Gas Chemicals Co.Ltd. (the tradename: MX nylon 6007, a relative viscosity - 2.7) is used as MXD6 in this example. As shown in Figure 2, the raw film 11 is inserted into the pair of pinch rollers 12 and then heated from the outside by a heater 13 with an air forced into the inside. Near a starting point when the raw film 11 begins to biaxially orient and grow into a bubble 16, air 15 is blown from an air duct 14. Incidentally, the bubble 16 is continuously drawn into a pair of pinch rollers 17. Through these steps, the simultaneous biaxial orientation is conducted in MD (the direction of the movement of the film) and TD (the width direction of the film) directions according to the tubular method, wherein the orientation ratios in both directions are 3.0. The biaxial oriented film obtained in such a way is then sent to a heat treat furnace based on the tenter method, whereby the film is heat-fixed at 210°C and becomes a biaxial oriented film. Incidentally, this biaxial oriented film is the oriented monolayer film easy to split containing Ny66 and MXD6. The oriented film easy to split (a 15-micrometer thickness) is used as the base film for the surface and is laminated with L-LDPE film as a sealant film (Tradename: Unilax LS-722C, produced by Idemitsu Petrochemical Co.Ltd. 50 micrometers thickness) according to the dry-laminate method and then it becomes laminated film easy to split of this experimental example. This laminated film easy to split can be made into a bag easy to split by being processed in a bag making machine. In the attached Table 1, the measurement results of the tear strength and the impact strength for the oriented monolayer film and the evaluation results of the ease to split and the ease to cut straight are shown. As for the laminated film easy to split, too, the ease to split and the ease to cut straight are estimated and the results are shown in Table 2. Also, in the Table 2, the results of strength against falling tests are also shown for the purpose of evaluating the practicality of the bag made of the laminated film easy to split. Incidentally, as for the split strength, it is done by measuring Elemendorf split strength (N/cm) following JIS-Z1702 in the direction of the orientation of the film. Also, the impact strength is measured by using a film-impact tester produced by Toyo Seiki Co.Ltd., wherein the impact strength is measured by punching the laminated film which is ring-likely fixed with a semi-tubular pendulum (diameter: 1/2 inch (12.7 mm); mass: 30 kg). As for the results of the measurement, the impact strength of 4,500 N/cm and over is expressed in a circle, and that of smaller than 4,5000 N·cm/cm is in a cross. When an impact strength is smaller than 45000 N·cm/cm, because the efficiency as a base material for the surface is lowered, the practicality as the base material for liquid packing is scarce. As for the evaluation of the ease to split, when the value "E", the value of Elemendorf split strength, is 70 N/cm and under, it is expressed in a circle, when the value E is between 70 and 90 N/cm, it is in a triangle, and when it is 90 N/cm and over, it is in a cross. When the value E becomes more than 90 N/cm, the ease to split is conspicuously lowered and the ease to cut straight is drastically decreased. The evaluation of the ease to cut straight is made in the following procedure. As is shown in Figure 3, it is supposed that slits 21 are put at a certain interval Ws = 2cm on the film 11 with the width of 20cm. When the film 11 is torn from the one end along the slit 21, the width We of the other end 22 of the film piece 11A is measured. It is possible to calculate deviation $\alpha$ with the width Ws on the one side of the film 11A and the width We of the other side as follows.

$$\alpha = [(Ws - We) / Ws] \times 100$$

In this experimental example, such measurement is done for 10 sheets of film pieces 11A, wherein, as for the average of deviation, less than ±10% is expressed in a double circle (the ease to cut straight is excellent), between ±10% and ±30% is in a circle (the ease to cut straight is good), and more than ±30% is in a cross (the ease to cut straight is insufficient). When the average is more than ±30%, it is difficult to cut film 11 straight. The strength against falling is determined by checking whether the bag is torn when the bag (130mm x 150mm) containing 150 cc of liquid with same quantity of a water and an antifreeze is dropped from the height of 2m repeatedly 20 times in a condition that the front and the back sides of the bag are put parallel to the dropping spot on the ground. But, the test temperature is -20 degrees. The dropping test was given to the prepared 10 bags. The results are expressed in a double circle when no bag is torn (= ideal for practical use), a circle when one or two bags are torn (= suitable for practical use) and in a cross when more than two bags are torn (= not suitable for practical use). As for the symbols used in the column of the total evaluation in Tables 1 and 2, a double circle means very good, a circle means good and a cross means poor.

Experimental examples 2-11 (not according to the present invention)

The oriented monolayer films based on the experimental examples 2-11 are produced by changing the mixture ratio of Ny66 and MXD6 in the above-mentioned experimental example 1 and the orientation ratio as shown in Table 1. Incidentally, the production method is the same as the above-mentioned experimental example 1. Also, the laminated film based on each experimental example is produced by using the oriented film (a 15-micrometer thickness) as a base film for the surface and by dry-laminating it with each film as the sealant film shown in table 2. Incidentally, the sealant film laminated on the base film in the experimental examples 2-9 is L-LDPE film with the thickness of 50 micrometers. Also, the sealant film used in the experimental example 10 is cast polypropylene (CPP) with the thickness of 60 micrometers. Moreover, the sealant film used in experimental example 11 is a film laminating PE film having the thickness of 20 micrometer with L-LDPE film having the thickness of 60 micrometer, wherein the oriented film is laminated on the side of PE film. The laminated film easy to split obtained in this way is made into a bag by processed in the bag-making machine. As for the oriented film obtained in the condition of the experimental examples 2-11, the measurement and evaluation of various features are made as well as in the experimental example 1, whose results are shown in Table 1. In Table 2, the ease to split and the ease to cut straight of the laminated film easy to split in the experimental examples 2-11 are evaluated as well as those in the experimental example 1. Also, the result of the strength against falling test of the bag is also shown.

Control examples 1-8

The control examples 1-8 are intended for the oriented monolayer film in the case where the mixture ratio of Ny66 and MXD6 and the orientation ratio in the above-mentioned experimental example 1 are changed into as shown in Table 3. Incidentally, the manufacturing process is the same as in the experimental example 1. Also, a laminated film in the control examples 1-8 are obtained by using the oriented film having the thickness of 15 micrometer as a base film and by further dry-laminating it with L-LDPE film with the thickness of 50 micrometer. The bags gotten in the condition of the comparative examples 1-8 are produced by processing each laminated film by the bag making machine. The measurement and the evaluation of a various characteristic are done as the experimental example 1 about each of the oriented film which is gotten in the condition of the control examples 1-8, too, the result of which are shown in Table 3. Also, in Table 4, an ease to split and an ease to cut straight about the laminated films in the control examples 1-8 are evaluated as the experimental example 1. Also, the strength against falling tests in each of the bags are also done, which are shown in the attached Table 4.

Consideration of the experimental examples 1-11 and the control examples 1-8 thereof.

Following items are possible in the consideration reviewing Table 1. Because each of the oriented monolayer film easy to split obtained in the condition of the experimental examples 1-11 contains Ny66 and MXD6 at the weight ratio of 40-85:60:15 and the biaxial orientation ratio during the production process is 2.8 and over both in MD and TD directions, the split strength in each experimental result is 70 N/cm and under and the ease to split is good or excellent. Also, the ease to cut straight can be considered sufficient. Moreover, each of the impact strength indicates 50000 N·cm/cm and over, which is an excellent value. The laminated films easy to split obtained from Table 2 in the condition of this the experimental examples 1-11 have an excellent ease to split even in the state of the bags. Also, the ease to cut straight is also good or very good. None or almost none of bags are torn in the falling test and therefore it is recognized that the bags in the experimental examples 1-11 have sufficient practical strength. From Table 3, the following items is possible to be studied. Though the oriented films based on the control examples 1, 2 and 3 are within the intended range of the orientation ratio in the present invention, because Ny66 content is over 85 and MXD6 content is under 15 (including 0), the ease to cut straight is insufficient though the impact strength is enough. Though the oriented films obtained in the conditions of the control examples 4 and 5 have the orientation ratio within the range intended by the present invention, because Ny66 content is under 40 (including 0), and MXD6 content is over 60, the impact strength is insufficient.

Experimental example 12

An oriented film in this experimental example comprises three layers and it is produced through steps mentioned below. The raw material mixture which contains Ny6 and MXD6 at the weight ratio of 95:5 is used in the 1st layer. The raw material mixture which contains Ny6 and MXD6 at the weight ratio of 40:60 is used in the 2nd layer. The raw material mixture which contains Ny6 and MXD6 at the weight ratio of 95:5 is used in the 3rd layer. The three kinds of raw material mixtures mentioned above are delivered to three extruders (with the diameter of 40mm) respectively, after being kneaded in fusion at the temperature of 270°C there, and is extruded from the multi-layer circular die with the diameter of 90mn in the condition of 3 layers of 1st/2nd/3rd layer(the thickness ratio = 1:2:1), and it is cooled down with water. In this way, first, the cylinder-like raw film 11 is manufactured. The layer structure of this film is shown in Figure 1. Next, this raw film 11 is simultaneously biaxially oriented as the experimental example 1 (See Figure 2). Incidentally, the ratio of the biaxial orientation is 3.0 both in the MD and TD directions. The biaxial oriented film is made into the oriented film of the monolayer prescribed by this experimental example by being sent to the heat treat furnace and being heat-fixed at the temperature of 210°C. Also, the laminated film easy to split prescribed by this experimental example is obtained by using, oriented film (a 15-micrometer thickness) of this experimental example as a base material film for the surface and laminating it with L-LDPE film (tradename: Unilax LS-722C, thickness of 50 micrometers) as sealant film by the dry-laminating method. The oriented film easy to split obtained in this way is made into a bag. In the attached Table 6, the result of the measurement of split strength and impact strength of the oriented film and the result of the evaluation of ease to split and ease to cut straight are shown. Also, in the Table 7, the result of the evaluation of ease to split and ease to cut straight is shown. In the same table, the test result of strength against falling to evaluate practicality of the bag made of the laminated film of this experimental example is shown.

Experimental examples 13-30

The rate of the mixing of Ny6 and MXD6 in the 1st-3rd layer in the above mentioned experimental example 12, the thickness ratio of the layer and the orientation ratio are changed as shown in Table 5 and is manufactured by manufacturing steps as the experimental example 12. Also, the laminate film easy to split is produced by using this oriented film easy to split (a 15-micrometer thickness) as a base material film for the surface and laminating it with each sealant film shown in Table 7 by the dry-laminate method. Incidentally, the sealant film used in the experimental examples 13-27 is L-LDPE film with a 50-micrometer thickness. The sealant film used in the experimental example 27 is EVA film with a 50-micrometer thickness. The sealant film used in the experimental example 28 is PP of a 60-micrometer thickness without orienting. The sealant film used in the experimental example 29 is a film with PE laminated with the thickness of 20 micrometer against the L-LDPE film with the thickness of 60 micrometer (an oriented film easy to split is laminated on the PE side). The sealant film used in the experimental example 30 is L-LDPE film with a 80-micrometer thickness. The laminated film obtained in this way is made into a bag easy to split by being processed by a bag-making machine. In Table 6, the measurement and the evaluation of various characteristics of the oriented film easy to split obtained in the experimental example 13-30 are made like in the experimental example 12. Also, in Table 6, the result of the evaluation of an ease to split and ease to cut straight of the laminated film easy to split in the experimental example 13-30 and a result of the test of a strength against falling of the bag made of the laminated film are also shown.

Control examples 9-19

The mixing ratio of Ny6 and MXD 6 in the 1st to 3rd layers in above-mentioned the experimental example 12, the thickness ratio of the layers, and the orientation ratios of each oriented film prescribed in these control examples are changed to indicate the values shown in Table 8 and it is produced through the same manufacturing step as the experiment example 12. Also, the laminated film is produced by using the oriented film (a 15-micrometer thickness) which is obtained in the condition of the control example 9-19 as a surface base material film and by laminating it with each sealant film shown in Table 10 by dry laminate method. Incidentally, the sealant film used by the control example 9-19 is L-LDPE film with a 50-micrometer thickness. Also, the laminated film obtained in this way is made into a bag easy to split in these control examples by being processed by a bag-making machine. As for the oriented film which is obtained in the condition of the control example 9-19, the measurement and the evaluation of a various characteristics are made as he experimental example 12, whose result is shown in Table 9. Also, in the attached Table 10, the ease to split and the ease to cut straight of the laminated film in the control example 9-19 are evaluated as the experimental example 12. Also, a result of the examination of a strength against falling of the bag is indicated together.

Consideration of the experimental examples 12-30 and the control examples 9-19.

Tables 6 and 7 show that any of the oriented films which is obtained in the condition of the experimental example 12-30 have 70 N/cm and under of split strengths, excellent ease to split and the good or very good ease to cut straight. Also, any of the impact strength is 65000 N·cm/cm and over, which is very high. Table 7 shows that the laminated film easy to split which is obtained in the condition of this the experimental example 12-30 has an excellent ease to split and very good or good ease to cut straight and also, almost no or no bags are torn in the falling test when it is made into bags, so it has sufficient practical strength. On the other hand, because the oriented film which is obtained from Tables 8, 9 in the condition of the control example 9 and 10 is a monolayer film comprising only of Ny6, a split strength is big and the ease to cut straight is inferior. The oriented film which is obtained in the condition of the control example 11 is inferior in the ease to cut straight because it is a monolayer of MXD6 content of 10%. Because the oriented film which is obtained in the condition of the control example 12 is a monolayer film comprising MXD6, an impact strength is bad. Though the oriented film which is obtained in the condition of the control example 13-15 has the 1st and 3rd layers, because the content rate of Ny6 and MXD6 in these layers is out of the range intended by this invention, the ease to cut straight is inferior. Though the oriented film which is obtained in the condition of the control example 16 has the 1st and 3rd layers, because the content rate of Ny6 and MXD6 in these layers is out of the range intended by this invention and the thickness ratio of the layers is out of the range intended by the present invention, the ease to cut straight and ease to split are inferior. Though the oriented film which is obtained in the condition of the control example 17-19 has the content rate of Ny6 and MXD6 in the lst-3rd layers within the range intended by this invention and the thickness ratio of the 1st to 3rd layers are within the range intended by the present invention because the orientation ratio during the biaxial orientation is smaller than 2.8 in MD and Td directions, at least one of split strength, ease to cut straight and the impact strength is inferior. Also, from Table 10, it is considered that at least one of ease to split, ease to cut straight and the strength against falling of the laminated film obtained in the condition of control example 9-19 is inferior.

Table 1

| | Raw material composition | | Orientation ratio | | Split strength (N/cm) | | Ease to split | Ease to cut straight | Impact strength (N cm/cm) | Total evaluation |
|---|---|---|---|---|---|---|---|---|---|---|
| | Ny66 | MXD6 | MD | TD | MD | TD | | | | |
| Ex. 1 | 80 | 20 | 3.0 | 3.0 | 70 | 70 | ○ | ○ | 70000 ○ | ○ |
| Ex. 2 | 70 | 30 | 3.0 | 3.0 | 65 | 65 | ○ | ○ | 60000 ○ | ○ |
| Ex. 3 | 60 | 40 | 3.0 | 3.0 | 60 | 60 | ○ | ◎ | 50000 ○ | ◎ |
| Ex. 4 | 60 | 40 | 3.5 | 3.0 | 50 | 55 | ○ | ◎ | 60000 ○ | ◎ |
| Ex. 5 | 60 | 40 | 4.0 | 3.0 | 38 | 45 | ○ | ◎ | 65000 ○ | ◎ |
| Ex. 6 | 60 | 40 | 3.5 | 3.5 | 45 | 45 | ○ | ◎ | 65000 ○ | ◎ |
| Ex. 7 | 50 | 50 | 3.5 | 3.0 | 50 | 55 | ○ | ◎ | 55000 ○ | ◎ |
| Ex. 8 | 40 | 60 | 3.5 | 3.0 | 55 | 55 | ○ | ◎ | 50000 ○ | ◎ |
| Ex. 9 | 60 | 40 | 2.8 | 2.8 | 70 | 70 | ○ | ○ | 50000 ○ | ○ |
| Ex. 10 | 60 | 40 | 3.5 | 3.0 | 50 | 55 | ○ | ◎ | 60000 ○ | ◎ |
| Ex. 11 | 60 | 40 | 3.5 | 3.0 | 50 | 55 | ○ | ◎ | 60000 ○ | ◎ |

Table 2

| | Sealant film, thickness (μm) | Ease to split | Ease to cut straight | Strength against falling | Total evaluation |
|---|---|---|---|---|---|
| Ex. 1 | L LDPE 50 | ○ | ○ | ○ | ○ |
| Ex. 2 | L LDPE 50 | ○ | ○ | ○ | ○ |
| Ex. 3 | L LDPE 50 | ○ | ◎ | ○ | ◎ |
| Ex. 4 | L LDPE 50 | ○ | ◎ | ○ | ◎ |
| Ex. 5 | L LDPE 50 | ○ | ◎ | ○ | ◎ |
| Ex. 6 | L LDPE 50 | ○ | ◎ | ○ | ◎ |

8

Table 2 (continued)

| | Sealant film, thickness (μm) | Ease to split | Ease to cut straight | Strength against falling | Total evaluation |
|---|---|---|---|---|---|
| Ex. 7 | L LDPE 50 | ○ | ◎ | ○ | ◎ |
| Ex. 8 | L LDPE 50 | ○ | ◎ | ○ | ◎ |
| Ex. 9 | L LDPE 50 | ○ | ○ | ○ | ○ |
| Ex. 10 | C P P. 60 | ○ | ◎ | ○ | ◎ |
| Ex. 11 | P E. 20/L LDPE 60 | ○ | ◎ | ○ | ◎ |

Table 3

| | Raw material composition | | Orientation ratio | | Split strength (N/cm) | | Ease to split | Ease to cut straight | Impact strength (N.cm/cm) | | Total evaluation |
|---|---|---|---|---|---|---|---|---|---|---|---|
| | Ny66 | MXD6 | MD | TD | MD | TD | | | | | |
| Cont. 1 | 100 | 0 | 3.0 | 3.0 | 85 | 85 | △ | × | 75000 | ○ | × |
| Cont. 2 | 100 | 0 | 3.2 | 3.2 | 80 | 80 | △ | × | 80000 | ○ | × |
| Cont. 3 | 90 | 10 | 3.0 | 3.0 | 75 | 75 | △ | × | 70000 | ○ | × |
| Cont. 4 | 20 | 80 | 3.0 | 3.0 | 70 | 70 | ○ | ○ | 30000 | × | × |
| Cont. 5 | 0 | 100 | 3.0 | 3.0 | 60 | 60 | ○ | ○ | 30000 | × | × |
| Cont. 6 | 60 | 40 | 2.0 | 2.0 | 95 | 95 | × | × | 30000 | × | × |
| Cont. 7 | 60 | 40 | 2.5 | 2.5 | 90 | 90 | × | × | 35000 | × | × |
| Cont. 8 | 60 | 40 | 2.7 | 2.7 | 80 | 80 | △ | × | 40000 | × | × |

Table 4

| | Sealant film, thickness (µm) | Ease to split | Ease to cut straight | Strength against falling | Total evaluation |
|---|---|---|---|---|---|
| Cont. 1 | L LDPE 50 | Δ | × | ○ | × |
| Cont. 2 | L LDPE 50 | Δ | × | ○ | × |
| Cont. 3 | L LDPE 50 | Δ | × | ○ | × |
| Cont. 4 | L LDPE 50 | ○ | ○ | × | × |
| Cont. 5 | L LDPE 50 | ○ | ○ | × | × |
| Cont. 6 | L LDPE 50 | × | × | × | × |
| Cont. 7 | L LDPE 50 | × | × | × | × |
| Cont. 8 | L LDPE 50 | Δ | × | × | × |

Table 5

| | Raw material composition | | | | | | Thick-ness ratio ①②③ | Orienta-tion ratio | |
| | ① | | ② | | ③ | | | | |
| | Ny6 | MXD6 | Ny6 | MXD6 | Ny6 | MXD6 | | MD | TD |
|---|---|---|---|---|---|---|---|---|---|
| E x. 12 | 95 | 5 | 60 | 40 | 95 | 5 | 1:2:1 | 3.0 | 3.0 |
| E x. 13 | 90 | 10 | 70 | 30 | 90 | 10 | 1:2:1 | 3.0 | 3.0 |
| E x. 14 | 80 | 20 | 40 | 60 | 80 | 20 | 1:2:1 | 3.0 | 3.0 |
| E x. 15 | 80 | 20 | 40 | 60 | 80 | 20 | 1:2:1 | 3.5 | 3.0 |
| E x. 16 | 80 | 20 | 40 | 60 | 80 | 20 | 1:2:1 | 4.0 | 3.0 |
| E x. 17 | 80 | 20 | 60 | 40 | 80 | 20 | 1:2:1 | 3.5 | 3.5 |
| E x. 18 | 80 | 20 | 60 | 40 | 80 | 20 | 1:2:1 | 3.5 | 3.0 |
| E x. 19 | 80 | 20 | 60 | 40 | 80 | 20 | 2:1:2 | 3.5 | 3.0 |
| E x. 20 | 80 | 20 | 60 | 40 | 80 | 20 | 1:1:1 | 3.5 | 3.0 |
| E x. 21 | 80 | 20 | 60 | 40 | 80 | 20 | 1:4:1 | 3.5 | 3.0 |
| E x. 22 | 80 | 20 | 60 | 40 | 80 | 20 | 1:8:1 | 3.5 | 3.0 |
| E x. 23 | 80 | 20 | 60 | 40 | 80 | 20 | 1:2:1 | 3.0 | 3.0 |
| E x. 24 | 80 | 20 | 60 | 40 | 80 | 20 | 1:2:1 | 2.8 | 2.8 |
| E x. 25 | 80 | 20 | 60 | 40 | 70 | 30 | 1:2 1 | 3.0 | 3.0 |
| E x. 26 | 80 | 20 | 60 | 40 | — | — | 2:1 | 3.0 | 3.0 |
| E x. 27 | 80 | 20 | 60 | 40 | 80 | 20 | 1:2:1 | 3.5 | 3.0 |
| E x. 28 | 80 | 20 | 60 | 40 | 80 | 20 | 1:2:1 | 3.5 | 3.0 |
| E x. 29 | 80 | 20 | 60 | 40 | 80 | 20 | 1:2:1 | 3.5 | 3.0 |
| E x. 30 | 80 | 20 | 60 | 40 | 80 | 20 | 1:2:1 | 3.5 | 3.0 |

Table 6

| | Split strength (N/cm) | | Ease to split | Ease to cut straight | Impact strength (N·cm/cm) | Total evaluation |
| | MD | TD | | | | |
|---|---|---|---|---|---|---|
| Ex. 12 | 70 | 70 | ○ | ◎ | 80000 ○ | ◎ |
| Ex. 13 | 65 | 65 | ○ | ◎ | 75000○ | ◎ |

Table 6   (continued)

| | Split strength (N/cm) | | Ease to split | Ease to cut straight | Impact strength (N·cm/cm) | Total evaluation |
|---|---|---|---|---|---|---|
| | MD | TD | | | | |
| Ex. 14 | 60 | 60 | ○ | ◎ | 70000○ | ◎ |
| Ex. 15 | 50 | 53 | ○ | ◎ | 75000○ | ◎ |
| Ex. 16 | 45 | 49 | ○ | ◎ | 80000○ | ◎ |
| Ex. 17 | 55 | 55 | ○ | ◎ | 80000○ | ◎ |
| Ex. 18 | 60 | 62 | ○ | ◎ | 75000○ | ◎ |
| Ex. 19 | 65 | 65 | ○ | ◎ | 85000○ | ◎ |
| Ex. 20 | 60 | 59 | ○ | ◎ | 78000○ | ◎ |
| Ex. 21 | 55 | 55 | ○ | ◎ | 75000○ | ◎ |
| Ex. 22 | 50 | 50 | ○ | ◎ | 70000○ | ◎ |
| Ex. 23 | 65 | 65 | ○ | ◎ | 71000○ | ◎ |
| Ex. 24 | 70 | 70 | ○ | ◎ | 65000○ | ◎ |
| Ex. 25 | 63 | 60 | ○ | ◎ | 70000○ | ◎ |
| Ex. 26 | 60 | 60 | ○ | ◎ | 75000○ | ◎ |
| Ex. 27 | 60 | 62 | ○ | ◎ | 75000○ | ◎ |
| Ex. 28 | 60 | 62 | ○ | ◎ | 75000○ | ◎ |
| Ex. 29 | 60 | 62 | ○ | ◎ | 75000○ | ◎ |
| Ex. 30 | 60 | 62 | ○ | ◎ | 75000○ | ◎ |

Table 7

| | Sealant film, thickness (µm) | Ease to split | Ease to cut straight | Strength against falling | Total evaluation |
|---|---|---|---|---|---|
| Ex. 12 | LLDPE 50 | ○ | ◎ | ○ | ◎ |
| Ex. 13 | LLDPE 50 | ○ | ◎ | ○ | ◎ |
| Ex. 14 | LLDPE 50 | ○ | ◎ | ○ | ◎ |
| Ex. 15 | LLDPE 50 | ○ | ◎ | ○ | ◎ |
| Ex. 16 | LLDPE 50 | ○ | ◎ | ○ | ◎ |
| Ex. 17 | LLDPE 50 | ○ | ◎ | ○ | ◎ |
| Ex. 18 | LLDPE 50 | ○ | ◎ | ○ | ◎ |
| Ex. 19 | LLDPE 50 | ○ | ◎ | ○ | ◎ |
| Ex. 20 | LLDPE 50 | ○ | ◎ | ○ | ◎ |
| Ex. 21 | LLDPE 50 | ○ | ◎ | ○ | ◎ |
| Ex. 22 | LLDPE 50 | ○ | ◎ | ○ | ◎ |
| Ex. 23 | LLDPE 50 | ○ | ◎ | ○ | ◎ |
| Ex. 24 | LLDPE 50 | ○ | ◎ | ○ | ◎ |
| Ex. 25 | LLDPE 50 | ○ | ◎ | ○ | ◎ |
| Ex. 26 | LLDPE 50 | ○ | ◎ | ○ | ◎ |

Table 7   (continued)

|  | Sealant film, thickness (µm) | Ease to split | Ease to cut straight | Strength against falling | Total evaluation |
|---|---|---|---|---|---|
| Ex. 27 | EVA, 50 | ○ | ◎ | ○ | ◎ |
| Ex. 28 | CPP, 50 | ○ | ◎ | ○ | ◎ |
| Ex. 29 | PE, 20 LLDPE 60 | ○ | ◎ | ○ | ◎ |
| Ex. 30 | LLDPE 80 | ○ | ◎ | ○ | ◎ |

## Table 8

|  | Raw material composition | | | | | | Thickness ratio ①②③ | Orientation ratio | |
|---|---|---|---|---|---|---|---|---|---|
|  | ① | | ② | | ③ | |  | | |
|  | Ny6 | MXD6 | Ny6 | MXD6 | NY6 | MXD6 |  | MD | TD |
| Cont. 9 | 100 | 0 | — | — | — | — | 1:0:0 | 3.0 | 3.0 |
| Cont. 10 | 100 | 0 | — | — | — | — | 1:0:0 | 3.2 | 3.2 |
| Cont. 11 | 90 | 10 | — | — | — | — | 1:0:0 | 3.0 | 3.0 |
| Cont. 12 | 0 | 100 | — | — | — | — | 1:0:0 | 3.0 | 3.0 |
| Cont. 13 | 100 | 0 | 60 | 40 | 100 | 0 | 1:2:1 | 3.0 | 3.0 |
| Cont. 14 | 100 | 0 | 60 | 40 | 100 | 0 | 1:2:1 | 3.2 | 3.2 |
| Cont. 15 | 100 | 0 | 60 | 40 | 100 | 0 | 2:1:2 | 3.5 | 3.0 |
| Cont. 16 | 100 | 0 | 60 | 40 | 100 | 0 | 3:1:3 | 3.5 | 3.0 |
| Cont. 17 | 80 | 20 | 60 | 40 | 80 | 20 | 1:2:1 | 2.0 | 2.0 |
| Cont. 18 | 80 | 20 | 60 | 40 | 80 | 20 | 1:2:1 | 2.5 | 2.5 |
| Cont. 19 | 80 | 20 | 60 | 40 | 80 | 20 | 1:2:1 | 2.7 | 2.7 |

Table 9

|  | Split strength (N/cm) | | Ease to split | Ease to cut straight | Impact strength (N·cm/cm) | Total evaluation |
|---|---|---|---|---|---|---|
|  | MD | TD |  |  |  |  |
| Cont. 9 | 85 | 85 | △ | × | 80000 ○ | × |
| Cont. 10 | 80 | 80 | △ | × | 90000 ○ | × |
| Cont. 11 | 75 | 75 | △ | × | 80000 ○ | × |
| Cont. 12 | 65 | 65 | ○ | ○ | 30000 × | × |
| Cont. 13 | 70 | 69 | ○ | × | 74000 ○ | × |

Table 9   (continued)

| | Split strength (N/cm) | | Ease to split | Ease to cut straight | Impact strength (N·cm/cm) | Total evaluation |
|---|---|---|---|---|---|---|
| | MD | TD | | | | |
| Cont. 14 | 60 | 65 | ○ | × | 80000 ○ | × |
| Cont. 15 | 80 | 80 | Δ | × | 85000 ○ | × |
| Cont. 16 | 90 | 92 | × | × | 85000 ○ | × |
| Cont. 17 | 95 | 95 | × | × | 45000 ○ | × |
| Cont. 18 | 90 | 90 | × | × | 50000 ○ | × |
| Cont. 19 | 80 | 82 | Δ | × | 60000 ○ | × |

Table 10

| | Sealant film, thickness (µm) | Ease to split | Ease to cut straight | Strength against falling | Total evaluation |
|---|---|---|---|---|---|
| Cont. 9 | LLDPE 50 | Δ | × | ○ | × |
| Cont. 10 | LLDPE 50 | Δ | × | ○ | × |
| Cont. 11 | LLDPE 50 | Δ | × | ○ | × |
| Cont. 12 | LLDPE 50 | ○ | ○ | × | × |
| Cont. 13 | LLDPE 50 | ○ | × | ○ | × |
| Cont. 14 | LLDPE 50 | ○ | × | ○ | × |
| Cont. 15 | LLDPE 50 | Δ | × | ○ | × |
| Cont. 16 | LLDPE 50 | × | × | ○ | × |
| Cont. 17 | LLDPE 50 | × | × | × | × |
| Cont. 18 | LLDPE 50 | Δ | × | ○ | × |
| Cont. 19 | LLDPE 50 | Δ | × | ○ | × |

**Claims**

1.  A biaxially oriented laminated film easy to split comprising a layer with a blend of nylon (Ny6) and poly meta-xylylene adipamide (MXD6), the weight ratio of said Ny6 and said MXD6 being 40-85:60-15, and the orientation ratios being at least 2.8 in both the MD and TD directions; characterised in that first and third layers containing Ny6 and MXD6 are laminated to opposite sides of the said Ny6 - MXD6 layer which forms a second layer, the weight ratio between Ny6 and MXD6 in the first and third layers being 60-95:40-5, there being more MXD6 contained in the second layer than in the first and third layers, the thickness ratio of said first to third layers being 1: 8:1-4:2:4.

2.  A film according to claim 1, in which the first to third layers are laminated together with other films.

**Patentansprüche**

1.  Biaxial orientierter trennbarer laminierter Film, welcher eine Schicht umfaßt aus einem Blend aus Nylon (Ny6) sowie Poly-Metaxylol-Adipamid (MXD6), wobei das Gewichtsverhältnis des Ny6 und des MXD6 zwischen 40-85: 60-15 liegt und die Orientierungsverhältnisse in der MD- sowie in der TD-Richtung zumindest 2,8 betragen, **dadurch gekennzeichnet,** daß eine erste und dritte Schicht, welche Ny6 sowie MXD6 enthalten, auf gegenüberliegenden Seiten der eine zweite Schicht bildenden Ny6-MXD6 Schicht auflaminiert sind, wobei das Gewichtsverhältnis zwischen Ny6 und MXD6 in der ersten und dritten Schicht 60-95:40-5 beträgt, wobei sich in der zweiten Schicht mehr MXD6 befindet als in der ersten und dritten Schicht, und wobei das Dickenverhältnis der ersten bis zur dritten Schicht 1: 8:1-4:2:4 beträgt.

2. Film gemäß Anspruch 1, in welchem die erste bis dritte Schicht mit anderen Filmen zusammenlaminiert ist.

**Revendications**

1. Film lamifié orienté biaxialement, facile à fendre, comprenant une couche avec un mélange de Nylon (Ny6) et de poly méta-xylylèneadipamide (MXD6), le rapport des poids dudit Ny6 et dudit MXD6 étant de 40-85:60-15, et les rapports d'orientation étant d'au moins 2,8 tant dans la direction MD que dans la direction TD, caractérisé en ce qu'une première et une troisième couche contenant Ny6 et MXD6 sont lamifiées sur des faces opposées de ladite couche Ny6 - MXD6 qui forme une deuxième couche, le rapport des poids de Ny6 et de MXD6 dans la première couche et dans la troisième couche étant de 60-95:40-5, une plus grande quantité de MXD6 étant contenue dans la deuxième couche que dans la première et dans la troisième couche, le rapport des épaisseurs de ladite première couche et de ladite troisième couche étant de 1:8:1-4:2:4.

2. Film selon la revendication 1, dans lequel les couches un à trois sont lamifiées ensemble avec d'autres films.

# F I G. I

~ 31

~ 32

~ 33

# F I G. 2

# F I G. 3